(19) Europäisches Patentamt
European Patent Office
Office européen des brevets

(11) **EP 4 672 227 A1**

(12) **EUROPEAN PATENT APPLICATION**

(43) Date of publication:
**31.12.2025 Bulletin 2026/01**

(21) Application number: **25305827.5**

(22) Date of filing: **06.06.2025**

(51) International Patent Classification (IPC):
**G10L 13/033** (2013.01)    **G10L 13/047** (2013.01)
**G10L 13/08** (2013.01)    **G10L 25/30** (2013.01)
**G10L 15/183** (2013.01)    **G10L 19/00** (2013.01)

(52) Cooperative Patent Classification (CPC):
**G10L 13/047; G10L 13/033; G10L 13/08;**
**G10L 25/30;** G10L 15/183; G10L 19/0018

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **24.06.2024 PCT/CN2024/101017**

(71) Applicant: **Orange**
**92130 Issy-les-Moulineaux (FR)**

(72) Inventors:
• **WU, Si**
**BEIJING, 100013 (CN)**
• **RONG, Wenge**
**BEIJING, 100191 (CN)**
• **DUAN, Feiyu**
**BEIJING, 100191 (CN)**

(74) Representative: **Plasseraud IP**
**104 Rue de Richelieu**
**CS92104**
**75080 Paris Cedex 02 (FR)**

(54) **METHOD FOR ENHANCING A GENERATIVE SPOKEN LANGUAGE MODEL**

(57) The method comprises obtaining at least one non-semantic feature including prosodic information of original speech data by computing a difference between an encoded unit sequence of the original speech data and an encoded unit sequence of normalized speech data; encoding said at least one non-semantic feature to produce a quantized representation of the at least one non-semantic feature; and inputting the quantized representation and discrete phoneme-related units into a deep learning model to generate a speech sequence representing the discrete phoneme-related units and the at least one non-semantic feature.

**FIG. 1**

**Description**

FIELD OF THE INVENTION

The present invention relates in general to, and more particularly to a method for enhancing a generative spoken language model and to a corresponding module and to a corresponding non-transitory computer-readable recording medium.

BACKGROUND OF THE INVENTION

Recent advancements in self-supervised large language models, trained on vast amounts of unlabeled data, have significantly influenced the development of similar models for speech data. Notable models such as w2v-BERT and HuBert have been successful in transforming speech into phoneme-related discrete sequences, thus improving tasks like Automatic Speech Recognition (ASR). However, these models are primarily designed for discriminative tasks and are not optimized for generative applications.

Moreover, while multimodal models that combine text and speech, such as SpeechGPT, have shown promise, their application is limited by the scarcity of textual data for many languages. Consequently, there is a growing interest in generative models trained solely on speech data, leading to the development of Generative Spoken Language Modeling (GSLM) and STatistical Learning of Early Language Acquisition (STELA) models. These models transform speech into discrete units for further processing. However, they primarily capture phoneme information and lack the ability to represent non-semantic speech features comprehensively.

Prosody-aware Generative Spoken Language Modeling (pGSLM) has attempted to address this limitation by incorporating rhythmic information through unit duration and fundamental frequency. Nevertheless, this approach still falls short in capturing all non-semantic aspects of speech, such as loudness and timbre.

In addition, it is now referred to [Refl]: EUGENE KHARITONOV ET AL: "Text-Free Prosody-Aware Generative Spoken Language Modeling", ARXIV.ORG, CORNELL UNIVERSITY LIBRARY, 201 OLIN LIBRARY CORNELL UNIVERSITY ITHACA, 14853, 10 May 2022 (2022-05-10).

[Refl] proposes to describe speaker-normalized prosody modeling using log-scale pitch values, specifically by computing the difference between an instantaneous log fundamental frequency and a speaker-dependent average.

SUMMARY OF THE INVENTION

The disclosure improves the situation.

It is proposed a method for enhancing a generative spoken language model, the method comprising:

obtaining at least one non-semantic feature including prosodic information of original speech data by computing a difference between an encoded unit sequence of the original speech data and an encoded unit sequence of normalized speech data;

encoding said at least one non-semantic feature to produce a quantized representation of the at least one non-semantic feature; and

inputting the quantized representation and discrete phoneme-related units into a deep learning model to generate a speech sequence representing the discrete phoneme-related units and the at least one non-semantic feature.

By implementing this method, several technical advantages are achieved. Firstly, the method enhances the generative spoken language model's ability to capture and represent non-semantic features such as prosody, loudness, and timbre. The feature extraction process, which involves computing the difference between the original and normalized speech data, ensures that subtle prosodic details are preserved. The use of quantized representations allows for efficient encoding and decoding, which is particularly advantageous for next-token prediction tasks in deep learning models. Additionally, the integration of these quantized features with discrete phoneme-related units within a multi-stream transformer model results in more natural and expressive speech synthesis.

The method is not limited to the specific examples provided herein but can be applied to various applications in speech processing. For instance, it can be used in text-to-speech synthesis, where capturing non-semantic features enhances the naturalness and expressiveness of generated speech. It can also be applied in voice conversion, speech enhancement, dubbing, speech therapy tools and other areas.

Contrary to the present disclosure, the speaker-normalized prosody modeling of [Refl] captures prosodic variation only to a limited extent and does not involve computing a difference between two complete encoded unit sequences: one derived from original speech data and the other from normalized speech data..

[Refl] further fails to disclose the generation of a quantized representation of such a difference, or its integration with discrete phoneme-related units into a generative deep learning model, as proposed in the present disclosure.

It is further proposed a module configured to enhance a generative spoken language model by :

obtaining at least one non-semantic feature including prosodic information of original speech data by computing a difference between an encoded unit sequence of the original speech data and an encoded unit sequence of normalized speech data;

encoding said at least one non-semantic feature to produce a quantized representation of the at least one non-semantic feature; and

inputting the quantized representation and discrete phoneme-related units into a deep learning model to generate a speech sequence representing the discrete phoneme-related units and the at least one non-semantic feature.

It is further proposed a non-transitory computer-readable recording medium on which a program is recorded for implementing the above method when the program is executed by a processor.

It is further proposed a computer program which, when executed by a processor, causes the processor to implement the above method.

In an example, a module comprising an encoder, a decoder and a codebook is used to encode the at least one non-semantic feature by:

providing the encoded unit sequence of the original speech data as an input to the encoder,

using the difference between the encoded unit sequence of the original speech data and the encoded unit sequence of the normalized speech data as a target sequence for reconstruction by the decoder to obtain an encoded representation of the at least one non-semantic feature, and

generating the quantized representation from the encoded representation by using the codebook.

By employing a module as defined above, the method achieves superior quantization of non-semantic features. This ensures that the subtle prosodic and expressive characteristics of the speech are captured effectively. A use case for this example includes improving the quality of synthesized speech in virtual assistants, making their responses sound more natural and expressive by preserving the prosodic nuances of the input speech.

In an example, the module is a vector-quantized variational autoencoder (VQVAE).

The use of VQVAE provides the advantage of leveraging powerful neural network architectures that can learn rich representations of input data. This allows for the effective encoding of complex non-semantic features.

In an example, each encoded unit sequence is obtained as an output of a trained speech-to-unit module having received the corresponding speech data as an input.

This approach ensures that the encoded unit sequences are derived from a reliable and consistent process, enhancing the robustness of the speech feature extraction.

In an example, the normalized speech data is obtained by processing the original speech data to isolate semantic content.

This approach ensures that non-semantic features are effectively isolated, allowing the model to focus on these aspects independently. This is particularly useful in applications like emotion detection in speech, where understanding prosodic variations can provide significant insights

In an example, the normalized speech data is obtained as an output of a trained unit-to-speech module having received the encoded unit sequence of the original speech data as an input.

Utilizing a unit-to-speech module for normalization ensures that the normalization process is efficient and effective, preserving the semantic integrity while reducing non-semantic variations.

In an example, the difference between the encoded unit sequence of the original speech data and the encoded unit sequence of the normalized speech data is calculated using a Dynamic Time Wrapping (DTW) algorithm.

he DTW algorithm provides precise alignment between the original and normalized speech data, ensuring accurate calculation of non-semantic differences.

In an example, the deep learning model is a multi-stream transformer model configured to use the quantized representation as at least one input stream.

This configuration allows the model to process a plurality of aspects of speech simultaneously, leading to a more comprehensive understanding and generation of speech.

In an example, the deep learning model is pre-trained on a generative spoken language modeling task and fine-tuned using the phoneme-related units and the quantized representation.

This approach ensures that the model benefits from a broad understanding of language before being specialized in prosodic features.

BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.

FIG. 1 depicts an example speech feature extraction module.
FIG. 2 depicts an example unit language model module.

DETAILED DESCRIPTION OF THE INVENTION

The present disclosure is focused on a proposed technique which encompasses methods, systems and devices adapted to contribute to a generative spoken language model.

Embodiments discussed herein are merely representative and do not limit the scope of the invention. It will also be obvious to one skilled in the art that all the technical features that are defined relative to a method or process can be transposed, individually or in combination, to a system and conversely, all the technical features relative to a system can be transposed, individually or in combination, to a process. It will also be obvious to one skilled in the art that all the technical features that are defined relative to a process or that can be transposed to such process may be provided, individually or in combination, as instructions of a computer program which may be stored, for instance, on a non-transitory storage medium, and which, when executed by a processing unit, cause the processing unit to carry out the process.

The terminology used in the present disclosure comprises the following expressions: "encoded unit sequence", "discrete phoneme-related units" and "normalized speech data". These expressions are clear to the person skilled in the art in the technical field of speech processing and generative spoken language modeling.

In particular, the notion of "encoded unit sequence" is well understood in the field, notably in the context of self-supervised learning models such as HuBERT or wav2vec. These models commonly apply quantization or discrete encoding techniques to segment and convert continuous speech signals into sequences of discrete units (e.g., tokens, codes). Such units typically represent short segments of the input speech and are used as the basis for downstream processing. As reflected in prior art such as [Ref1] (see section 3.1), this concept is widely known and does not require further definition.

The expression "discrete phoneme-related units" refers to any discrete symbolic representation capturing the phonemic content of spoken or textual input, regardless of how or when it is obtained. In training scenarios, such units may result from encoding speech data or from phonemic annotations of training corpora. In inference scenarios, they may be derived from user-provided inputs or text converted into phoneme sequences. The disclosure does not constrain the origin or the specific encoding method of the discrete phoneme-related units, allowing flexibility for the practitioner to adopt suitable representations.

The expression "normalized speech data" refers to speech data that has undergone a transformation preserving its semantic content (such as phonemes and words) while minimizing or removing prosodic variations such as intonation, stress, or rhythm. The distinction between original and normalized speech data lies primarily in the presence or absence of such prosodic variation.

The remarkable success of self-supervised large language models trained on unlabeled data has inspired researchers in the speech domain to explore similar applications on unlabeled speech data, yielding promising results. Models such as w2v-BERT and HuBert have been developed to transform speech into phoneme-related discrete coded sequences, leading to improved performance on tasks such as Automatic Speech Recognition (ASR). However, these models are primarily designed for discriminative tasks rather than generative models.

Concurrently, there have been extensive studies on multimodal models that combine text and speech, such as SpeechGPT. Nonetheless, the majority of languages worldwide lack corresponding textual representations in large quantities, posing a challenge to the universal application of these models. Therefore, several efforts have focused on generative models trained solely on speech data.

Generative Spoken Language Modeling (GSLM) schemes utilize a combination of modules:

a speech to unit (S2U) module,
a unit language model (uLM) module with a Transformer architecture and which is trained through next token prediction task, and
a unit to speech (U2S) module.

Alternatively, STatistical Learning of Early Language Acquisition (STELA) schemes utilize a unit language model (uLM) having a long short-term memory architecture.

According to the GSLM schemes, speech is first transformed into discrete units via the S2U module. Then the uLM module receives the discrete units as input and generates a unit sequence as output. The generated sequence is then converted back into speech through the U2S module.

While both GSLM and STELA schemes are capable of generating meaningful speech segments, they, inherently, rely on discrete units that only capture phoneme information.

To address this limitation, Prosody-aware Generative Spoken Language Modeling (pGSLM) schemes have been proposed. Such schemes utilize an adapted unit language model (uLM) module with a multi-stream Transformer architecture. The adapted uLM module of pGSLM receives as inputs a plurality of separate streams: a first stream comprises discrete units u, a second stream comprises unit duration values d, and a third stream comprises fundamental frequency values f0. This way, the uLM module obtains, for each unit, its unit duration and its fundamental frequency value.

This enhancement over classical GSLM allows including rhythmic information on top of phoneme information, which allows for a more comprehensive representation of speech. However, pGSLM may not fully capture all the features of speech beyond semantics, such as the loudness or timbre of the audio.

The proposed technique introduces a speech feature extraction scheme that captures non-semantic speech features, including prosodic information which is not limited to rhythmic information. The proposed technique further allows enhancing datasets for generative spoken language models by incorporating the captured features.

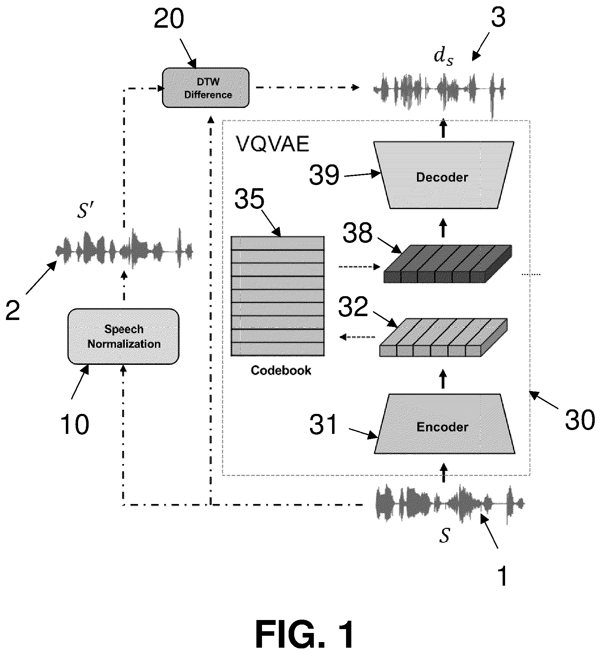

It is now referred to Figure 1, which represents an example of speech feature extraction module according to an aspect of the proposed technique.

The speech feature extraction module comprises:

a speech normalization module 10,
a speech sequence differentiation module 20, and
a quantized feature extractor 30.

Intuitively speech can be divided into two components, semantics, which solely conveys the content, and non-semantic features.

The speech normalization module 10 utilizes voice conversion to transform an input audio sequence from any given speaker into an audio sequence having a voice and prosody that are typical of a default speaker, thereby isolating the semantic information of the input audio sequence.

For this matter, the speech normalization module 10 is configured to process an encoded unit sequence 1 of original speech data to provide an encoded unit sequence 2 of normalized speech data.

In an example implementation, the original speech data is provided to a speech to unit (S2U) module to obtain an encoded unit sequence 1 of the original speech data. Then, the encoded unit sequence of the original speech data is provided to a unit to speech (U2S) module to obtain normalized speech data.

The speech-to-unit and unit-to-speech conversion allows for the elimination (or at least the reduction) of non-semantic aspects while preserving the semantic aspects. Normalized speech data, in this context, refers to the speech data that has undergone transformation to maintain semantic content, such as phonemes and words, while minimizing variations in prosodic features like intonation, stress, and rhythm. This process helps in isolating the semantic content from the non-semantic features.

Hereafter, the encoded unit sequence 1 of the original speech data is denoted as $s$, the encoded unit sequence 2 of the normalized speech data is denoted as $s'$ and the difference sequence 3 between $s$ and $s'$ is denoted as $d_s$. Given that the U2S module in GSLM is trained on a single voice corpus, $s'$ may be seen as normalizing speaker and prosody information, focusing more on semantics, while $d_s$ represent the features specially owned by $s$. The lengths of $s$ and $s'$ may not always align, therefore, a Dynamic Time Wrapping (DTW) algorithm may be applied to perform matching before the calculation of the difference sequence. Ultimately, at each time step $t$, $d_s$ may be calculated as follows:

$$d_s[t] = s[t] - \frac{1}{len(P_t)} \sum_{k \in P_t} s'[k]$$

where $P_t$ is the set of the indices matched to $t$, obtained from the DTW algorithm.

Following normalization, the normalized speech data is provided to a speech to unit (S2U) module to obtain the encoded unit sequence 2 of the normalized speech data.

The speech sequence differentiation module 20 is configured to compute the difference between the encoded unit sequence 1 of the original speech data and the encoded unit sequence 2 of the normalized speech data. This difference, referred to as a difference sequence 3, captures the non-semantic features that were minimized or eliminated during normalization.

By computing the difference between the original and normalized speech data, the module isolates prosodic features and other non-semantic aspects such as pitch, loudness, and timbre. This allows for a detailed representation of prosodic information and other characteristics that are important for natural and expressive speech synthesis.

The quantized feature extractor 30 is configured to process the encoded unit sequence 1 of the original speech data and the difference sequence 3 to generate quantized speech features 38. In the context of the present document, generating quantized speech features is advantageous over generating non-quantized speech features because discrete tokens are better suited for the task of next token prediction by a unit language model (uLM).

The extractor comprises several components:

an encoder 31,
a feature processor 32,
a codebook 35, and
a feature decoder 39.

The quantized feature extractor may for instance employ a vector-quantized variational autoencoder (VQVAE) architecture to effectively encode and decode the speech features. The encoder 31 takes the encoded unit sequence 1 of the original speech data and generates encoded representations. These encoded representations are processed by the feature processor 32 to extract relevant features which are mapped to the nearest entries in the codebook 35, producing the quantized features 38. The feature decoder 39 then attempts to reconstruct the speech that matches the non-semantic features captured in the difference sequence 3.

In an example, the encoder 31 follows a structure that is consistent with the convolutional feature encoder in wav2vec 2.0. In an example, the feature decoder 39 is symmetric to the encoder 31 and is constructed using dilated convolution and LayerNorm.

The feature decoder 39 may be configured to minimize reconstruction loss. For instance, the reconstruction loss may be modeled as a mean squared error (MSE) loss. For instance, the quantization layer may be configured to utilize the same loss function as the VQVAE originally disclosed in [1].

The overall loss function for the VQVAE model may be expressed as:

$$\mathcal{L}_{feature\ extractor} = \|d_{dec} - d_s\|_2^2 + \|sg[z_{e(x)}] - e\|_2^2 + \beta * \|z_{e(x)} - sg[e]\|_2^2$$

where $d_{dec}$ is the output of the feature decoder 39, $sg$ means stop gradient, $z_{e(x)}$ means the output of encoder 31, and e means the quantized embedding. $\beta$ is a hyperparameter which follows the default setting disclosed in [1].

To address the issue of mapping all encoder output features to a single or few embedding vectors in the original VQVAE model, a random restarts method, as disclosed in [2], may be employed to optimize model training. Specifically, if certain embeddings in the codebook 35 are used infrequently, they may be randomly replaced with encoder outputs from the current batch. This ensures that all embeddings are effectively utilized during training.

The combined operation of the speech feature extraction module involves the following acts:

an encoded unit sequence 1 of original speech data is provided to the speech normalization module 10, which outputs an encoded unit sequence 2 of normalized speech data,
the speech sequence differentiation module 20 generates the difference sequence 3 between the encoded unit sequences 1 and 2, representing an encoded unit sequence that retains primarily prosodic and other non-semantic information,
both the original encoded unit sequence 1 and the difference sequence 3 are provided to the quantized feature extractor 30, where the original sequence 1 serves as the input, while the difference sequence 3 serves as the reconstruction target, and the quantized feature extractor 30 processes these inputs to generate quantized speech features 38, which are more suitable for input into a deep learning model to generate expressive and natural-sounding speech.

The combined operation described above enables a comprehensive representation of speech by capturing non-semantic features, thereby allowing to enhance the performance of a generative spoken language model on tasks requiring nuanced understanding of prosody, for instance of loudness and/or timbre.

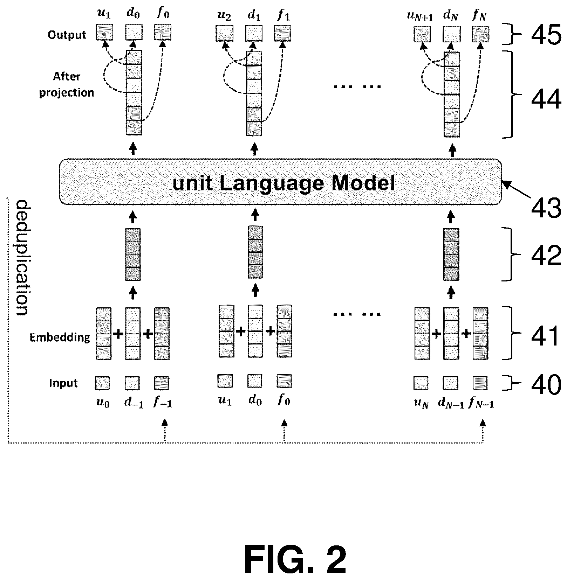

It is now referred to Figure 2, which represents an example of structure of an example unit language model (uLM) module according to an aspect of the proposed technique. The uLM module is adapted to process multiple streams of data to generate a comprehensive representation of speech. The uLM module, along with the quantized feature extractor of figure 1, can be combined with a S2U module in input and a U2S module in output to provide a generative spoken language model.

In an example, the uLM module has a multi-stream Transformer architecture.

The uLM module is adapted to train and utilize a deep learning model.

It is possible to pre-train the deep learning model from scratch, as is the case in pGSLM schemes. Another possibility, which is more economical as it does not consume extensive computational resources, is to fine-tune the deep learning model based on a pre-trained GSLM.

The unit language model (uLM) module comprises:

an input module 40,
an embedding module 41,
a projection module 42,
a unit language model core 43, and
an output module 44.

The input module 40 is configured to receive a plurality of streams of data. In the provided example, three streams are represented. A unit stream is formed of units or tokens $u_0, u_1, ... , u_N$ which may be the output of a speech-to-unit (S2U) module such as HuBERT. A unit duration stream is formed of unit durations $d_{-1}, d_0, ... , d_{N-1}$, providing duration information for each unit. A feature stream is formed of the quantized speech features 38 $f_{-1}, f_0, ... , f_{N-1}$. As seen, the unit duration stream and the feature stream are delayed by one frame in comparison with the unit stream. This delay can be obtained by performing a shift operation. Such shift operation is already applied in pGSLM schemes to obtain a one frame delay between units, on the one hand, and unit durations and F0, on the other hand.

Before the streams are fed to the input module and/or to the embedding module, a deduplication module (not represented) may be provided to merge consecutively repeating tokens in the unit stream into a single token. In an example, the frequency of a token's repetition may serve as the unit duration d. This process reduces redundancy and ensures that the model focuses on unique units and their corresponding durations and features.

The embedding module 41 is configured to embed each of the streams into a high-dimensional space suitable for processing by the subsequent modules. Each stream is embedded separately, allowing for distinct representation of e.g. units, durations, and quantized features.

The projection module 42 is configured to project the embedded streams into a unified space where the information from e.g. units, durations, and quantized features can be effectively combined. This projection allows integrating the different types of information before they are processed by the core unit language model.

The cross-entropy loss of $u$, d and $f$ may be respectively calculated as:

$$\mathcal{L}_{CE} = - \sum_{t}^{T} \sum_{k=1}^{vocab_{size}} y_{tk}\, log(P_{tk})$$

where $T$ is the sequence length, $y_{tk}$ is the truth label and $P_{tk}$ is the predicted distribution. A final loss may be calculated by a weighted sum:

$$\mathcal{L}_{fGSLM} = \mathcal{L}_u + \alpha * \mathcal{L}_d + \beta * \mathcal{L}_f$$

where $\mathcal{L}_u$, $\mathcal{L}_d$ and $\mathcal{L}_f$ are respectively the cross-entropy loss for unit, duration and feature, and $\alpha$ and $\beta$ are hyperparameters, consistent with the setting in pGSLM.

The unit language model core 43 may employ a multi-stream transformer architecture. It is configured to process the projected streams to generate a new sequence of units. The core leverages the transformer's attention mechanism to learn complex dependencies between units/tokens, durations, and features, thereby generating a comprehensive representation of speech.

The output module 44 is configured to generate a final output sequence 45 comprising predicted units $u_1, u_2, ... , u_{N+1}$ durations $d_0, d_1, ..., d_N$, and quantized features $f_0, f_1, ..., f_N$. This output sequence 45 may then be used for further processing, such as speech synthesis by a unit-to-speech (U2S) module.

The combined operation of the unit language model (uLM) involves the following acts:

the input module 40 receives a plurality of streams: e.g. units, unit durations, and quantized speech features,
the embedding module 41 processes each stream (possibly after the streams are deduplicated) independently to create high-dimensional embeddings for e.g. units, durations, and speech features
the projection module 42 combines the embedded streams into a unified space for integrated processing,
the unit language model core 43 processes the combined streams to generate a new sequence of e.g. units, durations, and speech features, and

the output module 44 generates the final output sequence 45, which includes e.g. predicted units, durations, and quantized speech features, ready for further use in tasks like speech synthesis.

This combined operation allows the unit language model to leverage detailed information from multiple streams, capturing a comprehensive representation of speech that includes both semantic and non-semantic features.

Unlike the pGSLM approach, which uses mean-normalized log F0 (fundamental frequency) for prosodic representation, the proposed technique leverages quantized speech features 38 obtained from the difference between original speech and normalized speech.

In pGSLM, the mean-normalized log F0 is designed to reduce speaker-specific characteristics by subtracting the mean pitch of the speaker, thereby emphasizing prosodic information like intonation and rhythm. However, this method may still retain some speaker-specific features. In contrast, the proposed technique considers normalized speech as a representation that encompasses general information from different speakers, effectively stripping away speaker-specific traits. By computing the difference between the original speech and this normalized speech, the proposed technique isolates and retains more detailed prosodic features, such as intonation, rhythm, and stress patterns. This difference captures distinctive prosodic and other non-semantic features.

In the context of Figures 1 and 2, several modifications and alternative implementations can be considered, as possible adaptations of the proposed technique.

In particular, while the proposed technique utilizes an encoded unit sequence of normalized speech and while, in the provided example, speech-to-unit (S2U) and unit-to-speech (U2S) conversion are used for normalization, alternative normalization methods such as vocal tract length normalization (VTLN) or speaker adaptation techniques could be employed to achieve similar reduction in non-semantic features while maintaining semantic content.

In particular, while the quantized feature extractor 30, as described, uses a vector-quantized variational autoencoder (VQVAE) to encode and decode speech features, other quantization techniques such as k-means clustering or discrete autoencoders can be used to generate the quantized representations of non-semantic features. Alternatively, a different neural network architecture, such as a Generative Adversarial Network (GAN) or a Transformer-based autoencoder, could be utilized for feature extraction and quantization.

In particular, while the input module 40 is configured to receive a plurality of streams of data and while in the provided example, a multi-stream Transformer architecture is assumed, other types of RNN architectures, such as a LSTM architecture, may be utilized.

In particular, while the input module 40 is configured to receive a plurality of streams of data and while in the provided example, three streams are represented: a unit stream, a unit duration stream and a feature stream, the skilled person would readily consider providing a different number of streams. For instance, the unit duration stream may be omitted when an application does not require detailed duration information, simplifying the model to handle only the unit and feature streams. Additionally or alternatively, one or more additional streams may be added to ensure that one or more specific corresponding aspects of to the original speech are captured and considered.

To assess whether the proposed technique truly enhance the comprehension of prosody by a GSLM, an evaluation of the example implementation as depicted in figures 1 and 2 has been conducted using the ProsAudio evaluation task defined in [3].

The ProsAudio evaluation comprises two subtasks: the protosyntax task and the lexical task. The protosyntax task tests the model's ability to identify strong versus weak prosodic boundaries. The lexical task evaluates the model's ability to distinguish between pauses inserted between and within words.

Two sets of data are considered: the dev set is the dataset used to train the model and the test set is a dataset not used to train the model and only used in a production phase.

Table 1 presents the results of the evaluation. Performance is evaluated on a 0 to 100 scale. Numbers in bold and with underline indicate the first and second best results, respectively. The proposed technique is denoted as fGSLM, with two variants corresponding to whether or not a shift operation is applied to delay the unit duration stream and quantized feature stream by one frame in comparison to the unit stream.

Table 1

| Method | protosyntax | | lexical | |
| --- | --- | --- | --- | --- |
| | dev | test | dev | test |
| STELA | **72.5** | **74.9** | 68.7 | 68.3 |
| STELA deduplicated | 58.0 | 58.5 | 48.7 | 46.7 |
| GSLM | 58.8 | 58.1 | 53.3 | 54.1 |
| GSLM deduplicated | 67.2 | 66.5 | 73.8 | 70.5 |
| pGSLM - cont. | 65.7 | 66.8 | 73.8 | 71.5 |

(continued)

| Method | protosyntax | | lexical | |
|---|---|---|---|---|
| | dev | test | dev | test |
| pGSLM - cont. + shift | 69.1 | 66.8 | 74.9 | 71.9 |
| pGSLM - disc. | 67.6 | 64.8 | 74.5 | 71.1 |
| pGSLM - disc. + shift | 69.1 | 65.9 | 72.6 | 72.9 |
| fGSLM | 65.7 | 66.3 | 74.9 | **74.2** |
| fGSLM + shift | 68.3 | 67.1 | **76.1** | 71.3 |

It is observed that in the protosyntax task, although the fGSLM model does not surpass the state-of-the-art, it demonstrates a significant improvement compared to GSLM and pGSLM, which employ similar structures.

Indeed, in the protosyntax task, fGSLM performs better on the test set than GSLM and pGSLM. In terms of performance, the test set is more critical because the dev set can be regarded as seen by the model during training, allowing for hyperparameter adjustments like epoch and learning rate. In contrast, the test set is never seen by the model during training, providing a more accurate performance assessment.

In the lexical task, fGSLM manages to exceed the highest state-of-the-art performance, achieving an improvement of up to 1.2 and 1.3 points on the dev and test sets, respectively. Indeed, fGSLM appears to perform better than STELA, GSLM and pGSLM in lexical task both on the dev set (76.1) and on the test set (74.2)

fGSLM does not outperform the STELA in the protosyntax task, allegedly due to a difference of model architecture between LSTM and transformer, but fGSLM successfully achieves a global balance in terms of enhancing prosody comprehension at the sentence level without substantially compromising the lexical level.

As experimentally evidenced, the proposed technique allows significantly enhancing the understanding of prosody by a speech pretrained model, leading to a higher-performing model.

This enhanced model has significant implications across various fields, such as speech understanding, speech generation, and textless speech-to-speech translation. Our approach involves integrating distinctive speech features into generative models, which improves the quality and naturalness of generated speech. Additionally, it enhances the fluency and diversity of speech content, enabling more comprehensive and context-aware speech processing tasks.

REFERENCES

[1] Aaron van den Oord, Oriol Vinyals, and Koray Kavukcuoglu, "Neural discrete representation learning," in Proc. of NIPS, 2017, pp. 6306-6315.

[2] Prafulla Dhariwal, Heewoo Jun, Christine Payne, Jong Wook Kim, Alec Radford, and Ilya Sutskever, "Jukebox: A generative model for music," CoRR, vol. abs/2005.00341, 2020

[3] Maureen de Seyssel, Marvin Lavechin, Hadrien Titeux, Arthur Thomas, Gwendal Virlet, Andrea Santos Revilla, Guillaume Wisniewski, Bogdan Ludusan, and Emmanuel Dupoux, "ProsAudit, a prosodic benchmark for self-supervised speech models," in Proc. of INTERSPEECH, 2023, pp. 2963-2967.

**Claims**

1. A method for enhancing a generative spoken language model, the method comprising:

   obtaining at least one non-semantic feature including prosodic information of original speech data by computing a difference between an encoded unit sequence of the original speech data and an encoded unit sequence of normalized speech data;
   encoding said at least one non-semantic feature to produce a quantized representation of the at least one non-semantic feature; and
   inputting the quantized representation and discrete phoneme-related units into a deep learning model to generate a speech sequence representing the discrete phoneme-related units and the at least one non-semantic feature.

2. The method of claim 1, wherein a module comprising an encoder, a decoder and a codebook is used to encode the at least one non-semantic feature by:

providing the encoded unit sequence of the original speech data as an input to the encoder,
using the difference between the encoded unit sequence of the original speech data and the encoded unit sequence of the normalized speech data as a target sequence for reconstruction by the decoder to obtain an encoded representation of the at least one non-semantic feature, and
generating the quantized representation from the encoded representation by using the codebook.

3. The method of claim 2, wherein the module is a vector-quantized variational autoencoder (VQVAE).

4. The method of any one of claims 1 to 3, wherein each encoded unit sequence is obtained as an output of a trained speech-to-unit module having received the corresponding speech data as an input.

5. The method of any one of claims 1 to 4, wherein the normalized speech data is obtained by processing the original speech data to isolate semantic content.

6. The method of any one of claims 1 to 4, wherein the normalized speech data is obtained as an output of a trained unit-to-speech module having received the encoded unit sequence of the original speech data as an input.

7. The method of any one of claims 1 to 6, wherein the difference between the encoded unit sequence of the original speech data and the encoded unit sequence of the normalized speech data is calculated using a Dynamic Time Wrapping (DTW) algorithm.

8. The method of any one of claims 1 to 7, wherein the deep learning model is a multi-stream transformer model configured to use the quantized representation as at least one input stream.

9. The method of any one of claims 1 to 8, wherein the deep learning model is pre-trained on a generative spoken language modeling task and fine-tuned using the phoneme-related units and the quantized representation.

10. A module configured to enhance a generative spoken language model by:

obtaining at least one non-semantic feature including prosodic information of original speech data by computing a difference between an encoded unit sequence of the original speech data and an encoded unit sequence of normalized speech data;
encoding said at least one non-semantic feature to produce a quantized representation of the at least one non-semantic feature; and
inputting the quantized representation and discrete phoneme-related units into a deep learning model to generate a speech sequence representing the discrete phoneme-related units and the at least one non-semantic feature.

11. A non-transitory computer-readable recording medium on which a program is recorded for implementing the method according to one of claims 1 to 9 when the program is executed by a processor.

**FIG. 1**

**FIG. 2**

Europäisches
Patentamt

European
Patent Office

Office européen
des brevets

# EUROPEAN SEARCH REPORT

**Application Number**

EP 25 30 5827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EUGENE KHARITONOV ET AL: "Text-Free Prosody-Aware Generative Spoken Language Modeling", ARXIV.ORG, CORNELL UNIVERSITY LIBRARY, 201 OLIN LIBRARY CORNELL UNIVERSITY ITHACA, NY 14853, 10 May 2022 (2022-05-10), XP091214611, | 1-4,6-11 | INV. G10L13/033 G10L13/047 G10L13/08 G10L25/30 |
| A | * second paragraph; page 2, left-hand column * * page 3, right-hand column, line 21 - line 26 * * last par. of section 3.2.2; page 4, right-hand column * * figure 1 * * second sentence of section 3.2.1; page 4, left-hand column * * section 3.3; page 5, left-hand column * * second to last sentence of section 2.1; page 2, right-hand column * * section 3.2; page 3, right-hand column * | 5 | ADD. G10L15/183 G10L19/00 |
| | ----- | | |
| A | ITAI GAT ET AL: "Augmentation Invariant Discrete Representation for Generative Spoken Language Modeling", ARXIV.ORG, CORNELL UNIVERSITY LIBRARY, 201 OLIN LIBRARY CORNELL UNIVERSITY ITHACA, NY 14853, 29 May 2023 (2023-05-29), XP091520967, * first par. of section 2; page 2, left-hand column * * figure 1 * | 2,4,6 | |
| | ----- | | |
| | -/-- | | |

**TECHNICAL FIELDS SEARCHED (IPC)**

G10L

The present search report has been drawn up for all claims

| Place of search | Date of completion of the search | Examiner |
|---|---|---|
| The Hague | 13 August 2025 | Stan, Guy-Bart |

EPO FORM 1503 03.82 (P04C01)

Europäisches
Patentamt

European
Patent Office

Office européen
des brevets

# EUROPEAN SEARCH REPORT

**Application Number**

EP 25 30 5827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OLAF HENNIGER ET AL: "Effects of Time Normalization on the Accuracy of Dynamic Time Warping", BIOMETRICS: THEORY, APPLICATIONS, AND SYSTEMS, 2007. BTAS 2007. FIRST IEEE INTERNATIONAL CONFERENCE ON, IEEE, PI, 1 September 2007 (2007-09-01), pages 1-6, XP031189976, ISBN: 978-1-4244-1596-0 * first sentence of section 1; page 1, left-hand column * ----- | 7 | |
| | | | **TECHNICAL FIELDS SEARCHED (IPC)** |

The present search report has been drawn up for all claims

| Place of search | Date of completion of the search | Examiner |
|---|---|---|
| The Hague | 13 August 2025 | Stan, Guy-Bart |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Text-Free Prosody-Aware Generative Spoken Language Modeling. **EUGENE KHARITONOV et al.** ARXIV.ORG. CORNELL UNIVERSITY LIBRARY, 10 May 2022
- **AARON VAN DEN OORD** ; **ORIOL VINYALS** ; **KORAY KAVUKCUOGLU**. Neural discrete representation learning. *Proc. of NIPS*, 2017, 6306-6315

- **PRAFULLA DHARIWAL** ; **HEEWOO JUN** ; **CHRISTINE PAYNE** ; **JONG WOOK KIM** ; **ALEC RADFORD** ; **ILYA SUTSKEVER**. Jukebox: A generative model for music. *CoRR*, 2020
- **MAUREEN DE SEYSSEL** ; **MARVIN LAVECHIN** ; **HADRIEN TITEUX** ; **ARTHUR THOMAS** ; **GWENDAL VIRLET** ; **ANDREA SANTOS REVILLA** ; **GUILLAUME WISNIEWSKI** ; **BOGDAN LUDUSAN** ; **EMMANUEL DUPOUX**. ProsAudit, a prosodic benchmark for self-supervised speech models. *Proc. of INTERSPEECH*, 2023, 2963-2967